# EUROPEAN PATENT SPECIFICATION

(11) **EP 3 588 851 B1**
(45) Date of publication and mention of the grant of the patent: **01.02.2023**
(21) Application number: 18305829.6
(22) Date of filing: 28.06.2018
(51) Int. Cl.: H04W 24/02, H04W 36/00, H04L 41/0806, H04L 41/0895, H04L 41/40, H04L 43/0852, H04L 43/20, H04W 88/08

(54) **METHOD FOR CONFIGURING AN ACCESS NETWORK NODE AND APPARATUS FOR IMPLEMENTING THE SAME**
VERFAHREN ZUR KONFIGURATION EINES ZUGANGSNETZKNOTENS UND VORRICHTUNG ZUR IMPLEMENTIERUNG DESSELBEN
PROCÉDÉ DE CONFIGURATION DE NOEUD DE RÉSEAU D'ACCÈS ET APPAREIL PERMETTANT SA MISE EN OEUVRE

(43) Date of publication of application: 01.01.2020
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: KHANFOUCI, Mourad, 35708 Rennes Cedex 7 (FR); BONNEVILLE, Hervé, 35708 Rennes Cedex 7 (FR); BRUNEL, Loïc, 35708 Rennes Cedex 7 (FR)
(74) Representative: Plasseraud IP

(56) References cited:
- WO-A1-2018/029854
- "3rd Generation Partnership Project; Technical Specification Group Radio Access Network; Study of separation of NR Control Plane (CP) and User Plane (UP) for split option 2; (Release 15)", 3GPP STANDARD; TECHNICAL REPORT; 3GPP TR 38.806, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.0.0, 18 January 2018 (2018-01-18), pages 1-22, XP051392782, [retrieved on 2018-01-18]
- ERICSSON ET AL: "Support of RAN UP network function virtualisation at handover", 3GPP DRAFT; R3-182228 SUPPORT OF RAN UP NETWORK FUNCTION VIRTUALISATION AT HANDOVER, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG3, no. Sanya, P. R. China; 20180226 - 20180302 15 April 2018 (2018-04-15), XP051430381, Retrieved from the Internet: URL:http://www.3gpp.org/ftp/Meetings%5F3GP P%5FSYNC/RAN3/Docs/ [retrieved on 2018-04-15]
- SAMSUNG ET AL: "Mobility procedures with high layer split", 3GPP DRAFT; R3-174611_MOB_V0.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, USA; 20171127 - 20171201 17 November 2017 (2017-11-17), XP051373192, Retrieved from the Internet: URL:http://www.3gpp.org/ftp/tsg%5Fran/WG3% 5FIu/TSGR3%5F98/Docs/ [retrieved on 2017-11-17]
- ERICSSON ET AL: "Xn handover in disaggregated gNB with E1 interface", 3GPP DRAFT; R3-173254 E1 CALL FLOWS - XN HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Berlin, Germany; 20170821 - 20170825 21 August 2017 (2017-08-21), XP051320083, Retrieved from the Internet: URL:http://www.3gpp.org/ftp/Meetings_3GPP_ SYNC/RAN3/Docs/ [retrieved on 2017-08-21]

## Description

The present disclosure relates to the field of wireless cellular networks, in particular 5G ultra dense networks.

In the last few years, significant efforts have been made to design and specify a new generation of wireless cellular networks beyond the currently deployed 4^{th} generation networks (LTE and LTE-A), to provide networks with an increased capacity and accommodate ultra-dense network deployments. These efforts have involved the specification of a new network architecture, which includes, as is the case for 3G (UMTS) and 4G (LTE) networks, a radio access network (RAN), sometimes referred to as a NG-RAN (Next-Generation RAN), and a core network, sometimes referred to as a 5GC (5G core) network.

An NG-RAN network may typically include one or several base stations, referred to as generalized Node-B (gNB or gNode-B), with a so-called disaggregated architecture, as a gNB may be split into a central unit (CU) and one or several distributed units (DU). As provided in the 3GPP Technical Specification TS 38.401 v1.0.0, entitled "NG-RAN; Architecture description (Release 15)," dated Dec. 2017, a gNB Central Unit (gNB-CU) is defined as a logical node hosting radio resource control (RRC), service data adaptation protocol (SOAP) and packet data convergence protocol (PDCP) protocols of the gNB or RRC and PDCP protocols of the en-gNB, that controls the operation of one or more gNB-DUs for the user terminals connected to the gNB-DUs. The gNB-CU terminates a front haul interface, called F1 interface, connected with the gNB-DU. The gNB-CU is also connected to the 5G core network through the so-called next generation (NG) interface. A gNB Distributed Unit (gNB-DU) is defined as a logical node hosting radio link control (RLC), medium access control (MAC) and physical (PHY) layers of the gNB or en-gNB, and its operation is partly controlled by gNB-CU. The 5G network architecture may typically be designed so that one gNB-DU supports one or multiple cells, while one cell is supported by only one gNB-DU. The gNB-DU terminates the F1 interface connected with the gNB-CU.

Using the splitting of the base stations into CU and DU, additional flexibility in the network deployment can be achieved through separated control and user planes and separation of control plane and user plane functional entities, as described in the 3GPP draft R3-171203, and discussed in the 3GPP Draft R3-171693. Networks may for example be deployed with a centralized user plane, that is, a user plane entity operated in a centralized unit, which is remote from control plane entities which are co-localized with distributed units. In this deployment, every distributed unit of the deployment is connected locally to the control plane central unit, denoted CU-C or CU-CP and to a remote centralized user plane central unit, denoted CU-U or CU-UP, that is common to different DUs in the deployment.

Using backup CU-C was also recently proposed in 3GPP for this disaggregated base station architecture to provide protection against hardware, software and/or local site failures. Different techniques for implementing CU redundancy have been proposed, including using multiple Stream Control Transmission Protocol (SCTP) instances (also called associations) over a F1 interface connecting a distributed unit with a logical CU-C comprising several processing instances of CU-C (for example a primary CU-C instance and a backup CU-C instance), possibly being in different geographical areas.

However, these additional network deployment flexibility and improved resiliency come at a cost when inter-DU mobility signaling is considered. In fact, when a user equipment, UE, performs a handover from a source gNB (gNB#1) to a destination (or target) gNB (gNB#2), a CU-C relocation is necessary at the destination gNB (gNB#2), which increases the overall handover latency.

International application publication No. WO 2018/029854 A1 describes a wireless communication system. The 3GPP Technical Report TR 38.806 V15.0.0, describes a study of separation of NR Control Plane (CP) and User Plane (UP) for split option 2. The 3GPP draft No. R3-182228 discusses support of RAN UP network function virtualization at handover. The 3GPP draft No. R3-174611 discusses mobility procedures with high layer split. The 3GPP draft No. R3-173254 discusses Xn handover in disaggregated gNB with E1 interface.

There is therefore a need for providing an improved network management scheme and apparatus implementing the same that address the above-described drawbacks and shortcomings of the conventional technology in the art.

It is an object of the present subject disclosure to provide an improved network management scheme and apparatus implementing the same.

Another object of the present subject disclosure is to provide an improved network management scheme and apparatus implementing the same for alleviating the above-described drawbacks and shortcomings of 5G access network architectures currently under consideration.

To achieve these objects and other advantages and in accordance with the purpose of the present subject disclosure, as embodied and broadly described herein, in one aspect of the present subject disclosure, a method for managing a first access network node in a network of a wireless communication system is proposed. The method comprises: determining in the network a (processing instance of a) second central unit for managing a control plane of data communications between a user equipment, UE, and the network, CU-C, other than a first CU-C of the first access network node, wherein the first access network node further comprises at least one first distributed units, DU, for wireless data communications between the UE and the first access network node, operating under the control of the first CU-C, and wherein the second CU-C controls at least one second DU comprised in a second access network node; and configuring the first access network node, wherein the configuring comprises: associating at least one DU among the at least one first DU with the second CU-C, such that the at least one DU and the at least second DU operate under the common control of the second CU-C for management of the control plane of data communications between the UE and the network.

The proposed scheme is therefore well suited for, even though not limited to, 5G access networks, in particular 5G access networks using a disaggregated architecture with separated control plane and user plane and separated control and user function entities, where a CU-C is co-located with a DU while the user plane entity is implemented in a centralized unit common to several DUs of the access network, by providing a scheme for access node reconfiguration which allows inter-DU mobility with reduced latency.

In one or more embodiments, the configuring may further comprise: configuring a first data communication control interface connection between the at least one DU and the second CU-C. In some embodiments, such the configuring the first data communication control interface connection may comprise: setting up the first data communication control interface connection between the at least one DU and the second CU-C.

In some embodiments, the configuring may further comprise: replacing a second data communication control interface connection between the at least one DU and the first CU-C with the first data communication control interface connection between the at least one DU and the second CU-C. In other embodiments, the configuring the first data communication control interface connection may further comprise: configuring respective flow priorities associated with data communication flows carried on the first data communication control interface connection to associate first flow priorities with flows between the at least one DU and the second CU-C, and second flow priorities with flows between the at least one DU and the first CU-C.

In one or more embodiments, the proposed method may further comprise: selecting in the network the first access node based on data communication traffic intensities respectively associated with the at least one first DU.

The selection of the gNB for reconfiguration for faster HO may be applicable to a specific category of UE, and in some embodiments the proposed method may further comprise: determining in the wireless communication system at least one UE belonging to a category, and selecting in the network the first access node based on data communication traffic intensities respectively associated with the at least one first DU for the determined at least one UE. The category may be a predetermined category, such as police UE, firemen UE, etc. In some embodiments, the determining in the wireless communication system the at least one UE belonging to the category may comprise: determining that the at least one UE has been dynamically assigned to the category.

In one or more embodiments of the proposed method, the network may be a 5G network, and the first and second access network nodes may be first and second generalized Node-B, gNB, respectively, of the 5G network.

In another aspect of the present subject disclosure, an apparatus is proposed, which comprises a processor, a memory operatively coupled to the processor, and network interfaces to communicate in a computer network, wherein the apparatus is configured to perform a method for access network node management as proposed in the present subject disclosure.

The proposed apparatus may be implemented in a 5G network, for example in a generalized Node-B, gNB, of a 5G network.

In yet another aspect of the present subject disclosure, a non-transitory computer-readable medium encoded with executable instructions which, when executed, causes an apparatus comprising a processor operatively coupled with a memory, to perform a method for access network node management as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method for access network node management as proposed in the present subject disclosure, is proposed. In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1a shows an exemplary architecture of a 5G wireless network;
Figure 1b shows an exemplary architecture of a 5G wireless network to which the proposed method may be applied in accordance with one or more embodiments;
Figure 2 is a diagram that shows call flows of an exemplary inter-gNB handover procedure;
Figure 3 is a block diagram illustrating a proposed method, in accordance with one or more embodiments;
Figure 4 is a diagram that shows call flows of an exemplary inter-gNB handover procedure, in accordance with one or more embodiments;
Figure 5 shows a diagram illustrating an exemplary fronthaul architecture reconfiguration, in accordance with one or more embodiments;
Figures 6a and 6b illustrate exemplary F1 interface configuration embodiments.
Figure 7 shows an exemplary embodiment of the proposed method in the context of an inter-gNB handover of a mission-critical user terminal.
Figure 8a is a diagram that illustrates an exemplary network architecture in which the common CU-C identification function is centralized.
Figure 8b is a diagram that illustrates an exemplary network architecture in which the common CU-C identification function is decentralized.
Fig. 9 illustrates an exemplary network node according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, entities, units, block diagrams and flowchart illustrations of the methods, systems, apparatuses, and computer program according to one or more exemplary embodiments. Each described function, engine, entity, unit, block of the block diagrams and flowchart illustrations can be implemented in hardware, software, firmware, middleware, microcode, or any suitable combination thereof. If implemented in software, the functions, engines, entities, units, blocks of the block diagrams and/or flowchart illustrations can be implemented by computer program instructions or software code, which may be stored or transmitted over a computer-readable medium, or loaded onto a general purpose computer, special purpose computer, data center, server, or other programmable data processing apparatus to produce a machine, such that the computer program instructions or software code which execute on the computer or other programmable data processing apparatus, create the means for implementing the functions, engines, entities, units, blocks of the block diagrams and/or flowchart illustrations described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be indifferently used to indicate that two or more elements are in direct physical or electrical contact with each other, or two or more elements are not in direct contact with each other, but yet still co-operate or interact with each other.

As used herein, the terms "packet", "packet data unit", and "PDU" may be indifferently used to indicate frames, data blocks, protocol data units or any unit of data that may be routed or transmitted between nodes or stations or across a network. A packet may include a group of bits, which may include one or more address fields, control fields and data, for example. A data block may be any unit of data or information bits.

For the purposes of the present disclosure, the term "server" is used herein to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and applications software which support the services provided by the server. Servers may vary widely in configuration or capabilities, but generally a server may include one or more central processing units and memory. A server may also include one or more mass storage devices, one or more power supplies, one or more wired or wireless network interfaces, one or more input/output interfaces, or one or more operating systems, such as Windows Server, Mac OS X, Unix, Linux, FreeBSD, or the like.

It should be understood that embodiments of the present subject disclosure may be used in a variety of applications. Although the present invention is not limited in this respect, embodiments of the proposed method for managing an access network node disclosed herein may be used in many apparatuses such as in any network node of a wireless communication system, such as, for example, a wireless communication system using one or more radio technologies, such as Time Division Multiple Access (TDMA), Code Division Multiple Access (CDMA), Frequency Division Multiple Access (FDMA), Orthogonal Frequency Multiple Access (OFDMA), Single-Carrier Frequency Division Multiple Access (SC-FDMA), etc., or any combination thereof. Examples of such wireless communication systems include the Global System for Mobile communications (GSM) system and its evolutions (including the General packet Radio Service (GPRS) system, the Enhanced Data Rate for GSM Evolution (EDGE) system), the Universal Mobile Telecommunication System (UMTS) and its evolutions (including High-Speed Downlink Packet Access (HSDPA), High-Speed Packet Access (HSPA), High-Speed Downlink Packet Access (HSUPA), and High-Speed Downlink/Uplink Packet Access (HSxPA)), the Code Division Multiple Access (CDMA) system and its evolutions (including the CDMA-2000 system), the Long-Term Evolution (LTE) system and its evolutions (including the LTE-Advanced (LTE-A) system), and their evolutions, whether already existing or developed in the future. For clarity, the following description focuses on 5G wireless networks. However, technical features of the present invention are not limited thereto.

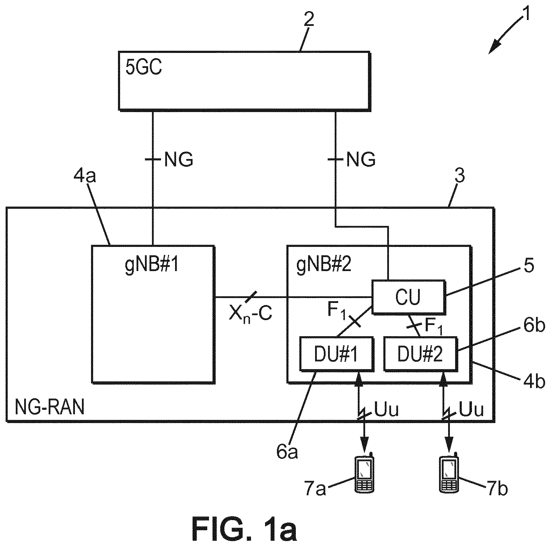

Fig. 1a shows an exemplary architecture of a 5G wireless network.

Shown on Fig. 1a is a wireless communication system (1) which comprises a network and one or more user equipments (UE) (7a, 7b). The network may comprise a radio access network (NG-RAN 3) and a core network (5GC 2). The radio access network NG-RAN (3) may comprise one or more base stations, referred to as gNBs, (gNB#1 4a, gNB#2 4b). Each gNB (4a, 4b) may comprise one or more distributed units (gNB-DU or DU) and a centralized unit (gNB-CU or CU). Each gNB (4a, 4b) of the NG-RAN (3) is connected to the 5GC (2) through a logical interface referred to as a NG interface. Two gNBs (4a, 4b) of the NG-RAN (3) may be interconnected through a logical interface referred to as a Xn interface. A gNB-CU and a gNB-DU are interconnected via a logical interface referred to as a F1 interface. Each DU may manage a cell of the 5G network, and in some architecture designs, one DU may be connected to only one CU, so as to avoid cell resource access conflicts between multiple CUs managing a same DU. In other architectures, a DU may be connected to multiple CUs, so as to increase the network resiliency, in particular against CU failures or F1 interface failures.

The UE (7a, 7b) may be mobile or fixed, and may be indifferently referred to, in the present disclosure, as a user equipment, user terminal (UT), a mobile station (MS), a subscriber station (SS), a mobile terminal (MT), etc. The UE (7a, 7b) may be in wireless communication with a DU (6a, 6b) of the NG-RAN (3) through a logical interface referred to as a Uu interface.

The protocols over the Uu and NG interfaces may be divided into the user plane protocols on the one hand, which are protocols implementing the actual PDU session service, that is, carrying user data through the access stratum (AS), and the control plane protocols on the other hand, which are protocols for controlling various aspects of the PDU sessions and the connection between a UE and the network, including requesting the service, controlling different transmission resources, handover, etc.

In some deployment scenarios of the NG-RAN (3) network of Fig. 1a, the CU (5) node of each gNB (4a, 4b) may provide both control plane functions and user plane functions to a plurality of DUs (6a, 6b) that operate under its control in the gNB. In such cases, one CU entity may comprise a control plane CU entity and a user plane CU entity, and the F1 interface between a CU and a DU may include both control plane and user plane interfaces.

Other scenario deployments have been recently considered, wherein the control plane and user plane entities are separated, leading to a control plane CU (CU-C) entity separate from the user plane CU (CU-U) entity. In such scenarios, the CU-C may be seen as a control plane signaling entity which implements the RRC protocol and PDCP-C protocol, while the CU-U may be seen as a user plane entity which implements the PDCP-U protocol. The control part of the CU (CU-C) may then be configured to perform control of the resources, connection establishment, reestablishment and release between a UE and a DU managed by the CU. A CU-C may further perform local radio resource management, such as dual-connectivity establishment/release between the NR base station and the neighbouring NR/LTE base stations.

Depending on the considered scenario, the different logical entities (distributed unit, control plane CU and user plane CU) may be physically implemented and deployed in different ways.

Different radio interface protocol stacks are specified for use in the access stratum on the Uu interface for the control plane and the user plane. The radio interface is typically composed of 3 layers with corresponding protocols. For 5G networks, the 3GPP TS 38.200 series describes the Layer 1 (Physical Layer), while layers 2 and 3 are described in the 3GPP TS 38.300 series specifications. Reference to these specifications may be made for further details on theses 3 layers or their associated protocols.

Layer 1, the physical layer (PHY), provides data transport services to higher layers, and interfaces the Medium Access Control (MAC) sub-layer of Layer 2 and the Radio Resource Control (RRC) Layer of Layer 3. The physical layer offers a transport channel to MAC, and access to the services offered by the PHY layer is through the use of a transport channel via the MAC sub-layer. The transport channel is characterized by how the information is transferred over the radio interface. Physical layer procedures include link adaptation, power control, cell search, Hybrid Automatic Repeat request (HARQ), and reception of System Information Block SIB1.

The layer 2 of 5G networks is split into the following sublayers: Medium Access Control (MAC), Radio Link Control (RLC), Packet Data Convergence Protocol (PDCP) and Service Data Adaptation Protocol (SOAP). MAC offers different logical channels to the Radio Link Control (RLC) sub-layer of Layer 2. The main services and functions of the MAC sublayer include mapping between logical channels and transport channels, multiplexing/demultiplexing of MAC Service Data Units (SDUs) belonging to one or different logical channels into/from transport blocks (TB) delivered to/from the physical layer on transport channels, scheduling information reporting, error correction through HARQ, priority handling between UEs by means of dynamic scheduling, priority handling between logical channels of one UE by means of logical channel prioritization, and padding.

In layer 3, the main services and functions of the RRC sublayer, which is defined in the control plane, include broadcast of System Information related to access stratum (AS) and non-access stratum (NAS), paging initiated by 5GC or NG-RAN, establishment, maintenance and release of an RRC connection between the UE and NG-RAN (including addition, modification and release of carrier aggregation, and addition, modification and release of Dual Connectivity in 5G New Radio (NR) or between E-UTRA and NR), security functions including key management, establishment, configuration, maintenance and release of Signalling Radio Bearers (SRBs) and Data Radio Bearers (DRBs), mobility functions (including handover and context transfer, UE cell selection and reselection and control of cell selection and reselection, inter-RAT mobility), QoS management functions, UE measurement reporting and control of the reporting, detection of and recovery from radio link failure, and NAS message transfer to/from NAS from/to UE.

A non-access stratum (NAS) layer located above the RRC layer provides services and functions such as session management.

In 5G networks, the control plane control unit (CU-C) may be provided with an RRC and PDCP-C layer for offering the RRC protocol and the PDCP-C protocol, while the data plane control unit (CU-U) may provide the PDCP-U protocol. A Distributed Unit may provide the physical layer, MAC layer, and RLC layer protocols for communication with UEs.

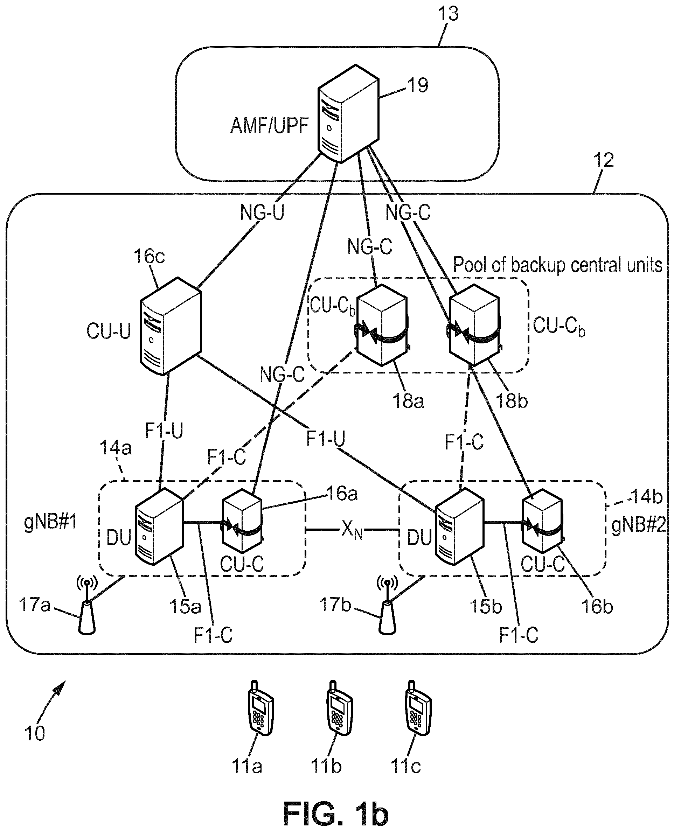

Fig 1b shows an example of such a deployment scenario which illustrates an exemplary architecture of a 5G wireless network different from the one shown on Fig. 1a.

Shown on Fig. 1b is a wireless communication system (10) which comprises a network and one or more user equipments (UE) (11a, 11b, 11c), which may be mobile or fixed. The network may comprise a radio access network (NG-RAN 12) and a core network (5GC 13). The radio access network NG-RAN (12) comprise a first and second DU (15a, 15b) co-located with a corresponding first and second control plane CU-C (16a, 16b), for achieving lower latency on the control plane F1 interface (F1-C) interconnecting a DU and a CU-C. A central user plane CU (CU-U 16c) is common to the DUs (15a, 15b) of the NG-RAN (10), and interconnected to each DU (15a, 15b) through a user plane F1 interface (F1-U). Each set of a control plane CU co-located with a DU, that is, located at the same place as the DU (for example through the CU-C entity implemented on the same server as the DU entity), may be viewed as a gNB (14a, 14b), in which case, in contrast with the architecture illustrated on Fig. 1a, a gNB node does not include a user plane signaling entity.

Each gNB entity 14a, 14b is equipped with a radio frequency unit 17a, 17b for transmitting and receiving signals on the air interface for wireless communications with the user equipments 11a, 11b, 11c of the system 10.

In order to increase the network resiliency, and in particular provide protection against hardware, software, and/or local site failures, multiple CU-C instances may be provided in the NG-RAN network (10), so as to provide CU-C entity redundancy, with one main CU-C processing instance and one or more back-up CU-C processing instances (18a, 18b). Such redundancy may be advantageously leveraged by having the one or more back-up CU-C processing instances not co-located with the main CU-C processing instance, and therefore not co-located with a DU as illustrated on Fig. 1b.

Fig. 1b shows a pool of backup control plane central units (18a, 18b) respectively connected to the sets of distributed units 15a, 15b, through respective F1-C interfaces, so as to enhance the network resiliency against hardware, software, and/or local site failures. For example, each of the backup CU-C units 18a, 18b may not be geographically co-localized with the CU-C unit 16a, 16b for which they provide backup. In this exemplary network deployment, each set of one or more distributed units 15a, 15b may be connected with a local control central unit CU-C 16a, 16b and a backup control central unit CU-C_{b} 18a, 18b through multiple SCTP connections(also referred to in the present disclosure as associations).

The backup control central units CU-C_{b} (18a, 18b) may be physically deployed in a remotely located pool of backup central units, for example implemented in one or more distant cloud servers.

The control central unit (CU-C and CU-C_{b}) are connected to the core network nodes, i.e. access and mobility management function (AMF) and the user plane function (UPF) (shown on Fig. 1b as one logical entity 19) through the user and control planes of a NG interface (NG-U and NG-C, respectively). Depending on the status of the co-located CU-Cs (16a, 16b), each DU (15a, 15b) may be connected to either the local CU-C (16a, 16b) through the solid line F1-C interface, or to a back-up CU-C (18a, 18b) in the backup CU-C pool.

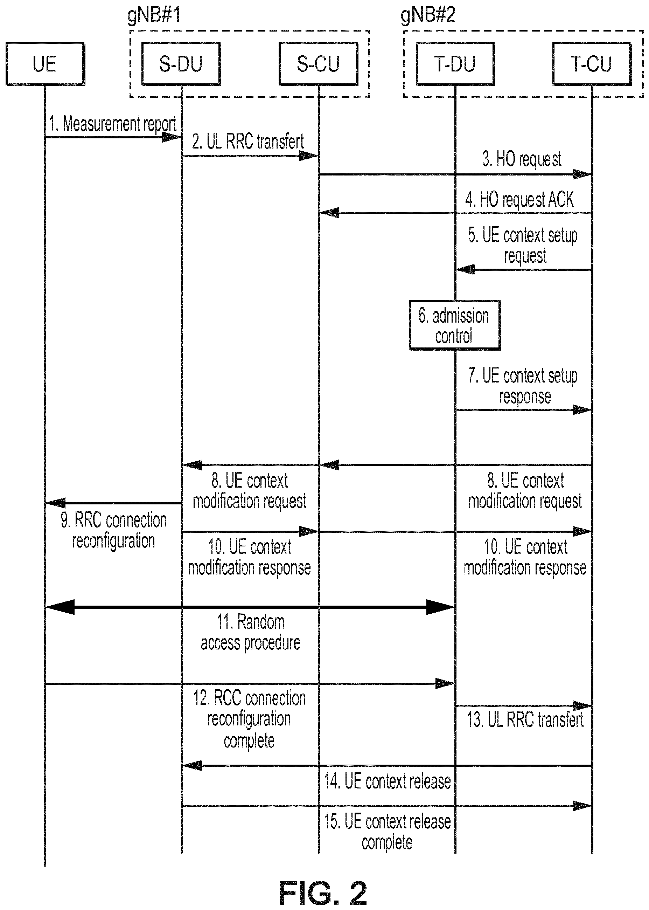

The network architecture illustrated on Fig. 1b combines the enhanced network deployment flexibility provided by the separation between control plane and user plane entities in some 5G network architectures, with the increased network resiliency obtained through the use of backup CU-C functions. However, it also has some drawbacks when it comes to mobility signaling, resulting in particular in an increased overall handover latency, as illustrated on Fig. 2.

Figure 2 is a diagram that shows a call flow for an exemplary inter-gNB handover procedure between a source gNB (gNB#1) and a target gNB (gNB#2), in a case where both the source and target gNB have a disaggregated architecture (the source gNB being split with control unit(s) S-CU and distributed unit(s) S-DU, and the target gNB being split with control unit(s) T-CU and distributed unit(s) T-DU), an example of which is illustrated on Fig. 1b.

As illustrated on Fig. 2, the UE sends (1) a Measurement Report message to the source DU (S-DU). Further to the receipt of the Measurement Report message from the UE, the S-DU sends (2) an Uplink RRC Transfer message to the source CU (S-CU) to provide the S-CU with the received Measurement Report. Upon receipt of the Uplink RRC Transfer message, the S-CU sends (3) a Handover Request message to the target CU (T-CU), to which the S-CU responds (4) with a Handover Request Acknowledge message. The T-CU also sends (5) a UE Context Setup Request message to the target DU (T-DU) to create a UE context and setup one or more bearers. Upon receipt of the UE Context Setup Request message, the T-DU performs (6) admission control for the UE, and then responds (7) to the T-CU with a UE Context Setup Response message. Further, the T-CU sends (8) to the S-CU a UE Context Modification Request message, which includes a generated RRC Connection Reconfiguration message, and indicates to stop the data transmission for the UE. The S-CU conveys (8) the UE Context Modification Request message to the S-DU, which upon receipt forwards (9) the RRC Connection Reconfiguration message to the UE. The S-DU also sends a Downlink Data Delivery Status frame to inform the S-CU about the unsuccessfully transmitted downlink data to the UE. Further, the S-DU responds to the received UE Context Modification Request message with a UE Context Modification Response message sent (10) to the S-CU, which forwards (10) it to the T-CU. A Random Access procedure is then performed (11) at the T-DU with the UE. The UE responds (12) to the T-DU with an RRC Connection Reconfiguration Complete message. Upon receipt of the RRC Connection Reconfiguration Complete message, the T-DU sends (13) an Uplink RRC Transfer message to the T-CU to convey the received RRC Connection Reconfiguration Complete message. The procedure illustrated on Fig. 2 ends with the T-CU sending (14) to the S-CU that is relayed by the S-CU to the S-DU, a UE Context Release Command message, the S-DU releasing the UE context, and the S-DU responding (15) to the S-CU with a UE Context Release Complete message. This message is then relayed to T-CU.

With the exemplary handover procedure illustrated on Fig. 2, and assuming the latency of one-way communications over the F1, X_{N} and NG interfaces to be around 5ms, the admission control to be performed in 10ms, the RACH procedure latency to be around 25ms, the latency of one way communication over the Uu interface (interface between the user terminal UE and the DU) to be 2ms and the processing delay to be around 2ms, the overall inter-DU handover latency for the exemplary architecture illustrated on Fig. 2 would be around 140ms, which is higher than the typical X2 handover latency in LTE-A (without CU/DU split) - which can be estimated to be around 91ms.

It is therefore desirable to decrease the inter-DU handover latency for 5G networks which use a disaggregated architecture wherein each DU of a gNB is associated with a corresponding CU, for example a corresponding CU-C collocated with the DU as illustrated on Fig. 1b, that is, architectures wherein an inter-DU UE handover, which will involve a source DU and a target DU, will also involve a first and second CU (instead of a single CU entity controlling both source DU and target DU), respectively corresponding (and controlling the operation of) the source DU and the target DU.

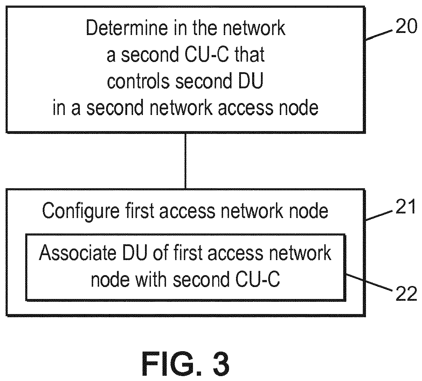

Fig. 3 illustrates a proposed method according to one or more embodiments.

A wireless communication system, for example a 5G system, that comprises a network, such as a radio access network, for example a NG-RAN, may comprise access network elements, among which a first access network node and a second access network node.

Each of the first access network node and the second access network node may comprise, as described in the above exemplary network illustrated by Fig. 1b, a first central unit for managing a control plane of data communications between a user equipment of the system and the radio access network, CU-C₁, and a second central unit for managing a control plane of data communications between a user equipment of the system and the radio access network, CU-C₂, respectively. The first CU-C may be configured for managing a control plane of data communications of UEs with the network through the first access network node, while the second CU-C may be configured for managing a control plane of data communications of UEs with the network through the second access network node.

The first access network node and the second access network node may further comprise a first and second sets of one or more distributed units, DU, configured for data communications between the UE and the first and second access network nodes, respectively.

In one or more embodiments, the architectures of the first and second access network nodes may be such that the operations of the first and second sets of DU, DU₁ and DU₂, are controlled, at least partly, by the first and second CU-C, CU-C₁ and CU-C₂, respectively.

Considering the first access network node, and therefore the first CU-C, CU-C₁, and the first set of DU, DU₁, the first access network node may be initially configured in one or more embodiments with the CU-C₁ controlling, at least partly, the operations of DU₁.

In one or more embodiments of the present subject disclosure, a (re)configuration of the first access network node may comprise the determining (20) in the network of a CU-C, CU-C_{d}, different from the first CU-C of the first access network node CU-C₁, which controls, at least partly, the operations of the second set of DU, DU₂.

In some embodiments, the determined CU-C, CU-C_{d}, may coincide, at least partially, with, or correspond to, a CU-C associated with the second access network node, for example the second CU-C of the second access network node, CU-C₂.

In other embodiments, the determined CU-C, CU-C_{d}, may coincide, at least partially, with, or correspond to a backup CU-C, for example comprised in a pool of backup CU-C central units, as illustrated on Fig. 1b, some of which being respectively associated with the first and second access network nodes, the back-up CU-C being selected on the basis of being configured to provide backup of the second CU-C of the second access network node, CU-C₂.

The first access network node may then be configured (21), in one or more embodiments, so as to operate in association with the determined CU-C, CU-C_{d}.

In embodiments, the configuring may comprise associating (22) distributed units of the first set of DU, DU₁, with the determined CU-C, CU-C_{d}, so that some or all of the distributed units of the first access network node operate in association with the determined CU-C, CU-C_{d}, that is, operate under the control of the CU-C_{d} entity instead of the CU-C₁ entity. As a consequence, distributed units of the first access network node and distributed units of the second access network node may operate under the common control of a same CU-C entity, i.e. the CU-C_{d} entity, for management of the control plane of data communications between the UE and the network.

In some embodiments, the configuring (resp. reconfiguring) the first access node may comprise the configuring (resp. reconfiguring) a data communication control interface connection between at least one distributed unit of the first set of DU, DU₁, and the determined CU-C, CU-C_{d}. In embodiments, such configuring may comprise setting up the data communication control interface connection between at least one distributed unit of the first set of DU, DU₁, and the determined CU-C, CU-Cd.

Depending on the embodiment, the proposed configuration scheme advantageously allows operations of distributed units in a first access network node to be performed in association with (for example under the control, at least partial, of) a single central unit for the control plane CU-C, CU-C_{d}, that is common to distributed units of the first access network node and to distributed units of the second access network node, or two central units for the control plane, i.e. the CU-C initially (that is, before configuration of the first access node) operated in association with the first access network node, and the determined CU-C, CU-C_{d}, with some of the functions of those two CU-C being merged and operated by one of them so that some CU-C functions are commonly provided to distributed units of the first access network node and to distributed units of the second access network node.

In embodiments where a backup CU-C is determined to be used for the reconfiguration of an access network node, the backup CU-C may advantageously be used as a common CU-C entity for providing CU-C functions to distributed units of both first and second access network nodes.

The proposed configuration scheme advantageously allows the merging of CU-C functions to be provided to distributed units of two distinct access network nodes. This leads to a reduction of the latency of handover between the two distinct access network nodes.

In particular, the proposed configuration scheme advantageously provides in some embodiments a common control plane anchor (for example configured in a common back-up CU-C) to distinct access network nodes through a merger of respective control functionalities of the central units of the access network nodes. In some embodiments, such common control plane anchor may advantageously be used for enabling fast and on-demand group mobility management.

In one or more embodiments, the first and second access network nodes may respectively comprise first and second gNB nodes of a NB-RAN access network, gNB₁ and gNB₂, with CU-C₁ and DU₁ being a control plane gNB central unit (gNB-CU) and gNB distributed unit(s) (gNB-DU) of gNB₁, respectively, and CU-C₁ and DU₂ being a control plane gNB central unit (gNB-CU) and gNB distributed unit(s) (gNB-DU) of gNB₂.

For example, and referring back to Fig. 1b, the first and second access network node may comprise the first and second gNB 14a, 14b, respectively, with the first access node comprising DU 15a and CU-C 16a, and the second access network node comprising DU 15b, and CU-C 16b. With respect to the (re)configuration of the first gNB 14a, the determined CU-C according to embodiments of the present subject disclosure may correspond to the CU-C 16b of the second gNB 14b, or to a CU-C 18b in a pool of backup central units, for example a backup CU-C configured to operate as backup CU-C of the CU-C 16b of the second gNB 14b. This common CU-C entity that provides control plane functions with respect to distributed units of the first and second access network nodes may further be associated with a CU-U entity common to one or more DUs of the access network, as illustrated by the exemplary architecture shown on Fig. 1b, thereby forming a central unit CU common to the first and second access network nodes.

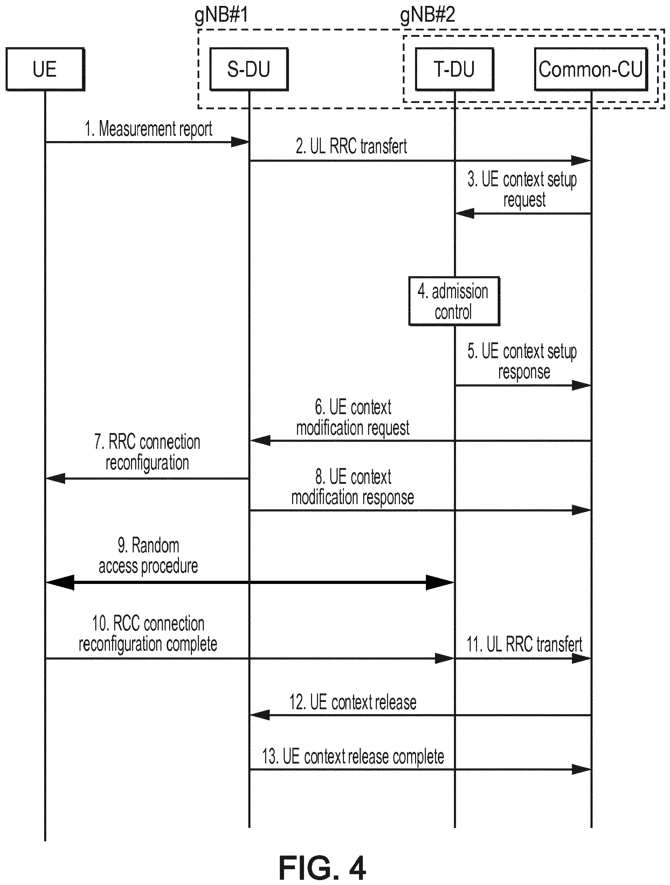

Figure 4 is a diagram that shows a call flow for an exemplary inter-gNB handover procedure between a source gNB (gNB#1) and a target gNB (gNB#2), in a case where the source and target gNBs include respective DU entities (source DU, S-DU, and target DU, T-DU) which are both associated with the same CU entity (common CU). Depending on the embodiment, a CU entity common to several DU entities may have separated user plane and control plane functions, so that it may comprise a common control plane CU, that is, a CU-C common to the several DU entities, and a common user plane CU, that is, a CU-U common to the several DU entities, as is illustrated, however only with respect to the common CU-C, on Fig. 1b.

Referring to Fig. 4, the user terminal UE may be handed over from a source gNB, comprising a S-DU and a common CU-C according to embodiments of the present subject disclosure, to a target gNB, comprising a T-DU and the common CU-C. In this example, distributed units of the source gNB and the target gNB are operated in association with the common CU-C as described above. Said otherwise, the common CU-C provides the control plane functions with respect to distributed units of the source gNB and the target gNB.

As illustrated on Fig. 4, the UE sends (1) a Measurement Report message to the source DU (S-DU). Further to the receipt of the Measurement Report message from the UE, the S-DU sends (2) an Uplink RRC Transfer message to the common CU (Common-CU) to provide the Common-CU with the received Measurement Report. Upon receipt of the Uplink RRC Transfer message, the Common-CU sends (3) a UE Context Setup Request message to the target DU (T-DU) to create a UE context and setup one or more bearers. Upon receipt of the UE Context Setup Request message, the T-DU performs (4) admission control for the UE, and then responds (5) to the Common-CU with a UE Context Setup Response message. Further, the Common-CU sends (6) to the S-DU a UE Context Modification Request message, which includes a generated RRC Connection Reconfiguration message, and indicates to stop the data transmission for the UE. The S-DU forwards (7) upon receipt the RRC Connection Reconfiguration message to the UE. Further, the S-DU responds to the received UE Context Modification Request message with a UE Context Modification Response message sent (8) to the Common-CU. A Random Access procedure is then performed (9) at the T-DU with the UE. The UE responds (10) to the T-DU with an RRC Connection Reconfiguration Complete message. Upon receipt of the RRC Connection Reconfiguration Complete message, the T-DU sends (11) an Uplink RRC Transfer message to the Common-CU to convey the received RRC Connection Reconfiguration Complete message. The procedure illustrated on Fig. 4 ends with the Common-CU sending (12) to the S-DU a UE Context Release Command message, the S-DU releasing the UE context, and the S-DU responding (13) to the Common-CU with a UE Context Release Complete message.

When considering assumptions for the latencies of the signalling between the different entities similar to the ones mentioned above in relation to Fig. 2, the overall handover latency can be evaluated as approximately 100ms, which corresponds to an improvement of around 40% in terms of handover latency with respect to the inter CU-C handover illustrated on Fig. 4.

Such significant gain of handover latency advantageously results from the access network node architecture and/or fronthaul interfaces reconfiguration schemes proposed in the present subject disclosure, which may be leveraged for instance to enable fast handover for mission critical user terminals.

In one or more embodiments, a determination may be performed to identify base stations, or access nodes (e.g. in the case of a 5G network, gNBs) of the radio access network (each base station or access node comprising at least a distributed unit operated under the control of a control unit for control plane functions) which are the most likely to contribute to the mobility of selected user terminals, for example user terminals belonging to a category of mission critical user terminals. Such determination may be made based on an estimated traffic distribution in the radio access network. As explained in further details below, the contribution of access nodes may be evaluated through a ranking of the access nodes of the network that takes into account various network and traffic parameters. Preferably, the access nodes identified through such determination may be reconsidered periodically in order to adapt to the expected evolution of the traffic of the selected user terminals.

In some embodiments, access nodes may be selected in the network based on data communication traffic intensities, for example traffic intensities respectively associated with distributed units of the access nodes. The configuration or reconfiguration of an access node as proposed in the present subject disclosure may then be applied to the distributed units of the selected access node that show the most traffic intensities. In such cases, the selection of access nodes for reconfiguration, for example for faster handover performance, may advantageously not depend on a specific category of UEs.

In one or more embodiments, a common control plane anchor CU (for example a common back-up CU-C) may be provided to the access nodes previously identified, for example by merging of the control functionality of the respective control units of these access nodes. The configured common CU-C may advantageously be used for enabling fast and on-demand group mobility management. Different embodiments for the merging and the corresponding signaling configuration are described below.

In other embodiments, the determination of access nodes to be configured or reconfigured may be based on UEs belonging to a category (e.g. mission critical UEs, such as PMR UEs (police forces, firemen, security forces, etc.)), and access nodes may be selected in the network based on data communication traffic intensities respectively associated with the DUs used for data communication by the UEs identified as belonging to the specific category.

Depending on the embodiment, the category may be a predetermined category, or may be dynamically assigned to UEs, on an individual or group basis. For example, mission-critical UEs may be designated as such as of their first use, or may be dynamically identified by the network, upon occurrence of predetermined circumstances, such as, for example, heavy traffic load in the network that requires access nodes reconfiguration as proposed in the present subject disclosure.

In one or more embodiments using an architecture such as the one illustrated on Fig. 1b, that is, with gNBs comprising a DU co-located with a control plane CU (local CU-C), the user plane CU function being provided by a centralized unit common to all gNBs, a switch between the local CU-C and the determined common CU-C may be enabled by reconfiguration of the F1-C interface between the DU of the identified gNB and the CU-C controlling the DU.

Depending on the embodiment, various combinations of the above-mentioned determination of access node, configuration of a common CU-C, and reconfiguration of the interface between the DU of the determined access node and the CU-C controlling the DU may be considered, such as, for example, with respect to a 5G network with an architecture as illustrated on Fig. 1b:
In some embodiment, for each handover or group of handovers of a mission-critical UE(s), the source and target gNBs are identified, then a common back-up CU-C is configured, and F1-C interfaces are reconfigured.

In other embodiments, gNBs which strongly contribute to mission-critical mobility are identified, and a common backup CU-C is preconfigured during a preliminary phase. Then, for each handover or group of handovers of a mission-critical UE(s), F1-C interfaces are then reconfigured for the handover(s) duration.

In yet other embodiments, gNBs which strongly contribute to mission-critical mobility are identified, and a common backup CU-C is preconfigured during a preliminary phase. Then, when a strong need of handovers of a mission-critical UEs is identified, F1-C interfaces are reconfigured as long as this strong need is identified.

As discussed above, in one or more embodiments, the proposed reconfiguration of the front-haul architecture of an access network, which may involve reconfiguring one or several access network nodes, may comprise the merger of control plane central unit (CU-C) functions or entities associated with respective distributed units of a first and second access network nodes.

In one or more embodiment, such merger may comprise the re-configuring a backup CU-C so that a same CU-C entity may be the backup CU-C entity for at least some of the distributed units of the first access network node and for at least some of the distributed units of the second access network node.

In other embodiments, where CU-C functions are virtualized as part of a Network Function Virtualization architecture used in the access network, the virtualization of CU-C functions may be used for achieving a CU-C function merger.

In a NFV architecture, various network entity functions may be virtualized by being implemented by software executed on generic hardware platforms each comprising a processor and memory operatively coupled thereto. The function is considered virtual as it is implemented by software that can be executed on a generic hardware platform that is interchangeable with other generic platforms. An NFV orchestrator is a function implemented by software provided for organizing the execution of various network functions on a same hardware platform (including, for instance, ensuring that there is no conflicting concurrent execution of software implementing different functions).

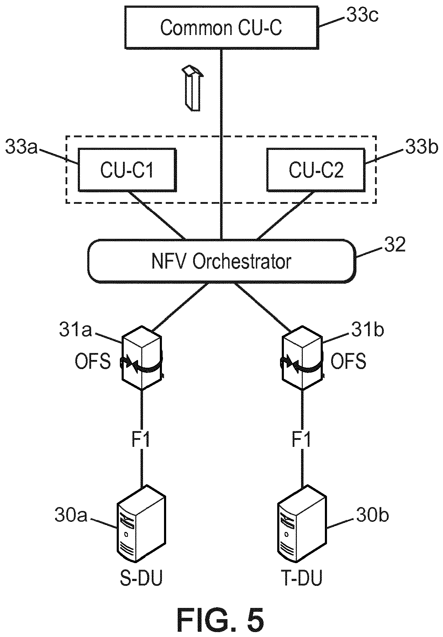

Figure 5 shows a diagram illustrating an exemplary fronthaul architecture reconfiguration.

Referring to Fig. 5, in a NFV architecture, the distributed units of the first and second access network nodes (30a and 30b) may be connected to respective CU-C entities CU-C1 and CU-C2 (33a and 33b) respectively executed on open flow switch (OFS) platforms (31a and 31b) through an NFV orchestrator (32). The NFV orchestrator (32) may be configured to receive traffic information and identify the relevant distributed unit among the distributed units of the first and second access network nodes (30a and 30b) with respect to traffic directed to or originated from the first or second CU-C entity (33a, 33b). In a NG-RAN network, the interface between the first/second set of distributed units may be a F1-type interface, as illustrated on Fig. 5. In particular, the RRC functions of the first CU-C (33a) and second CU-C (33b) may be virtual functions that are controlled by the NFV orchestrator (32).

In one or more embodiments, the NFV orchestrator may receive information that contains a request to trigger a front-haul architecture reconfiguration. For example, this information is the expected number of handovers for the mission critical user terminals, the base stations are contributing to.

Upon receipt of the request to trigger a front-haul architecture reconfiguration, the NFV orchestrator may initiate the merger of the virtual CU-C provided by the first and second CU-C entities CU-C1 and CU-C2 (33a and 33b) into a common virtual function (33c), that is, a common CU-C virtual entity that provides CU-C functions to at least some of the distributed units of the first access network node (30a) and at least some of the distributed units of the second access network node (30b). Such common virtual function may advantageously be used as mobility management function for the specific user terminal set. The physical layer of the said distributed unit DU is a flexible physical layer where the resources are split between the different virtual functions that implement the CU-C functionality.

In one or more embodiments, the CU-C function merger performed by the NFV orchestrator may involve backup CU-C virtual functions, so that the NFV orchestrator may merge the virtual functions of backup CU-C entities of the first and second access network nodes into a common virtual function that may advantageously be used as mobility management function for the specific user terminal set. The physical layer of the said distributed unit DU is a flexible physical layer where the resources are split between the different virtual functions that implement the CU-C functionality.

In one or more embodiments, the proposed method may advantageously address the need to ensure that the common CU-C is common to the different access nodes of the deployment. In embodiments, specific access nodes that are contributing the most to the mobility of mission-critical UEs may be determined in advance by Operation and Maintenance (OAM) or Self-Organizing Network (SON) functions. The fronthaul may then be reconfigured for these access nodes by the means of fronthaul architecture reconfiguration as described in the present subject disclosure.

In other embodiments, each of one or several access nodes may be configured, further to measuring an important incoming traffic of mission-critical user terminals requiring handover to a target access node, reconfigure its own fronthaul and provide to the target access node information indicating its backup CU-C (for example the address of its backup CU-C), for example along with or included in the handover preparation signaling. Upon receipt of such information from the source access node, the target access node may be configured to reconfigure its fronthaul to the same backup CU-C and may adjust its physical layer accordingly in order to reserve resources for the incoming mission-critical users' traffic.

In yet other embodiments, each of one or several access nodes may be configured to identify source access nodes, based on respective likelihood to hand over an important traffic of mission-critical user terminals to the access node then operating as target access node for these handovers. The target access node may be configured to transmit to these access nodes information indicating its backup CU-C (for example the address of its backup CU-C). Such information may be stored in the source access nodes, and may be used for fast fronthaul reconfiguration during the handover preparation.

In one or more embodiments, the proposed configuration of a network access node that comprises a Control Unit and one or more Distribution Units may comprise a configuration of the interface between the CU and the DUs, that is, in a 5G network, a configuration of the F1 interface that connects the control unit and at least some of the one or more corresponding distribution units of the access network node.

In one or more embodiments, the configuration of the F1 interface may be based on characteristics of user terminals using the radio access network. For example, the configuration of the F1 interface may be designed so as to connect the DUs of the base stations that are contributing to an important number of handovers of mission critical user terminals to a common CU, in order to benefit from faster handovers as explained above.

Depending on the embodiment, different options may be considered for the F1 interface reconfiguration:
According to an embodiment, referred to as "F1 flex mechanism", a distributed unit DU associated to a first CU-C node (for example, a CU-C node co-located with the DU) may be configured to reconfigure its physical layer to attach to a second CU-C node, that is, establish a F1 interface with the second CU-C node, with respect to the traffic of one or more of the user terminals that use the DU for access to the network, while maintaining existing connections with the first CU-C node for the other user terminals that use the DU for access to the network. In other words, a data communication control interface connection between the DU and the first CU-C node may be replaced, for at least some UEs, with a data communication control interface connection between the DU and the second CU-C.

Another embodiment, referred to as "site multi-homing", makes use of the possibility to control multiple stream-level associations between a DU node and a plurality of CU-C instances within the same F1 interface, with a stream control protocol such as, for example, the Stream Control Transmission Protocol (SCTP). SCTP is a stream control protocol, specified in the IETF (Internet Engineering task Force) Request For Comments 4960, and developed by the Sigtran working group of the IETF for the purpose of transporting various signaling protocols over IP networks, that allows controlling a plurality of streams that are multiplexed on one logical interface. In embodiments in a NG-RAN where SCTP is supported as the transport layer of F1-C signaling bearers, multiple SCTP associations may be created to be contained within one F1 interface between a CU and a DU, including for example a first association to a first CU-C instance, and a second association to a second CU-C instance. For example, a first SCTP association may be used for the F1-C interface between a DU and its main CU-C instance, and a second SCTP association may be used for the F1-C interface between the DU and a backup CU-C instance, the main CU-C and the backup CU-C forming a logical CU-C controlling the operation of the DU for the control plane function.

The multihoming of different streams on the same F1 interface, connecting a DU with a first and a second CU-C can be controlled in some embodiments through stream priorities which allow allocating each stream to the first or the second CU-C, through corresponding first and second associations. In such embodiments, the configuring of a data communication control interface connection between a DU and a first and a second CU-C may comprise the configuring respective flow priorities associated with data communication flows carried on such data communication control interface connection to associate first flow priorities with flows between the DU and the second CU-C, and second flow priorities with flows between the DU and the first CU-C. For example, the flow priorities may be configured to associate first flow priorities with flows between the DU and the second CU-C, and that are higher than second flow priorities associated with flows between the DU and the first CU-C.

Each stream, corresponding to data traffic of a user terminal, may be assigned a priority which determines the CU-C node, between the first CU-C node and the second CU-C node, towards which the stream will be directed, thereby establishing a F1 interface with the DU for that stream. In this embodiment, the F1 interface reconfiguration may be regarded as comprising an exchange of the roles between a first and second SCTP associations over the F1 interface with the first and second CU-C nodes, respectively.

In some embodiments where a handover from a source distribution unit to a target distribution unit is requested, the second CU-C node may be chosen so that it can serve as a common CU-C node between the source distribution unit and the target distribution unit.

In some embodiments, the one or more user terminals for which a F1 interface with the second CU-C is setup may be dynamically selected or preselected based on one or more criteria, including for example a priority level.

Depending on the embodiment, each user terminal using the DU for access to the network may be checked against these one or more criteria to determine whether at least one of these criteria is met by the user terminal. This determination may be performed at the DU.

In the event that this determination leads to the result that the user terminal fulfils at least one of the criteria, the DU may be configured to trigger a reconfiguration of its physical layer to establish a F1 interface and thereby connect with another CU-C node for the user terminal. For example, a determination may be made as to whether the user terminal qualifies as a mission critical user terminal or not. Upon determining that the user qualifies as a mission critical user terminal, the DU used by the user terminal to access the network in association with a first CU-C may be configured to reconfigure its F1 interface with the first CU-C so as to establish for the user terminal a F1 interface with a second CU-C. As a result, a DU may concurrently have F1 interfaces established with different CU-C nodes.

Such reconfiguration may advantageously be leveraged when receiving handover requests for certain user terminals, for example by selecting a common CU-C for all mission critical user terminals, hence allowing faster handover for those mission critical user terminals.

In one or more embodiments, the determination that a user terminal fulfills at least one predefined criteria may be made upon receipt, from the user terminal, of user terminal information. For example, the determination that a user terminal is a mission critical user terminal, may be made, for example at a DU, upon receipt, from the user terminal, of an indication that the user terminal is a mission critical user terminal.

In some embodiments, the user terminal may receive from the network upon initial attachment to the network an identifier, based on which the user terminal may generate an indication to be transmitted to one or more distribution units of the network which are concurrently and/or successively used by the user terminal for data communication with the network.

One or more DUs of the network may be configured so that, upon receipt of the indication from the user terminal, each DU reconfigures the F1 interface used for connection with a first CU-C node for the data traffic associated with the user terminal, to setup an F1 interface with a second CU-C node to be used for the data traffic associated with the user terminal.

The DU may be preconfigured with information for the determination of the second CU-C node, or configured upon request with such information. Depending on the embodiment, the second CU-C node may be configured for all the DUs, or alternatively updated by the nodes based on the traffic of mission critical user terminals. One example metric for triggering F1-Flex is a measured increase in the traffic of the mission critical user terminals in a subset of DUs of the deployment.

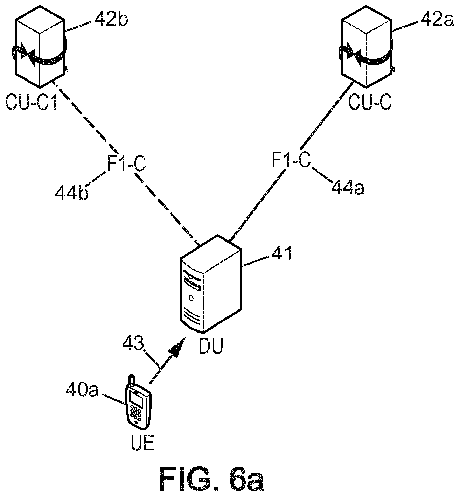

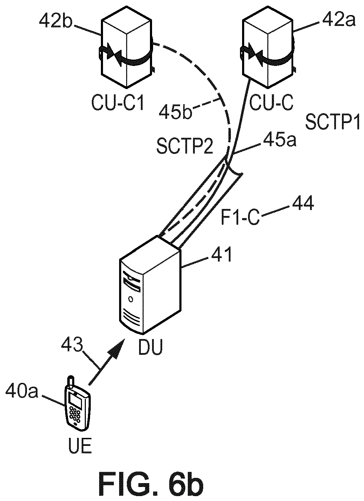

Fig. 6a shows an exemplary F1 interface configuration using F1 flex, while Fig. 6b shows an exemplary F1 configuration using site multihoming.

Shown on Fig. 6a is a user terminal (40a) in data communication with a network comprising a DU (41) controlled by a CU-C (42a) through the DU (41). In one or more embodiments, the UE may transmit to the DU (41) a measurement report that includes an indicator of its mission critical status. This indicator can be for example a binary variable *a*, such that the UE is a mission critical UE if *a* = 1, otherwise the UE is not a mission critical UE if *a* = 0 (43). The DU (41) is initially connected with a first CU-C (42a) through a first F1 interface F1-C (44a). Upon receipt (43) of an indication that the UE is a mission critical status, the DU (41) triggers a configuration of the existing F1 interface (44a), which includes setting up a second F1 interface F1-C (44b) to a second CU-C (CU-C1, 42b), and selecting this second F1 interface (44b) so that traffic associated with the user terminal 40a is controlled by the second CU-C (CU-C1, 42b) through the second F1 interface (44b).

Shown on Fig. 6b is a user terminal (40a) in data communication with a network comprising a DU (41) controlled by a CU-C (42a) through the DU (41). In one or more embodiments, the UE may transmit to the DU (41) a measurement report that includes an indicator of its mission critical status. This indicator can be for example a binary variable *a* such that the UE is a mission critical UE if *a* = 1, otherwise the UE is not a mission critical UE if *a* = 0 (43). The DU (41) is initially connected to both a first CU-C (42a) and a second CU-C (CU-C1, 42b) through a F1 interface (44) which carries streams controlled through associations with the first CU-C (42a) or the second CU-C (CU-C1, 42b), using for example the SCTP protocol to generate SCTP associations (SCTP1, 45a, and SCTP2, 45b). Upon receipt (43) of an indication that the UE is a mission critical status, the DU (41) triggers a configuration of the existing F1 interface (44), which includes modifying the existing stream association with the first CU-C (42a) corresponding to the data traffic of the user terminal (40a) to a stream association with the second CU-C (42b), for example through priority management. In this manner, the stream association for the user terminal (40a) is switched from the first CU-C (42a) to the second CU-C (42b), within the same F1 interface (44).

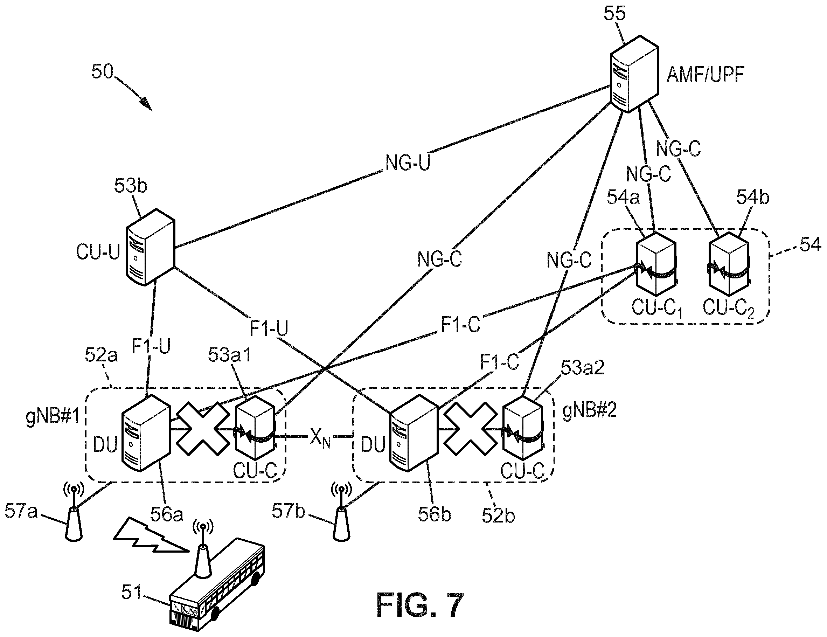

Fig. 7 shows an exemplary embodiment of the proposed method in the context of an inter-gNB handover of a mission-critical user terminal.

Shown on Fig. 7 is a 5G wireless communication system (50) with an architecture similar to that shown on Fig. 2b: The system (50) comprises an NG-RAN network and a 5GC network, the NG-RAN network comprising a first gNB node (52a) and a second gNB node (52b), a pool of backup central units (CU) (54), and a user-plane central unit (CU-U) (53b), and the 5GC network comprising a AMF/UPF node (55) providing an access and mobility management function (AMF) and a user plane function (UPF).

Each of the first gNB (52a) and the second gNB (52b) comprises a control-plane central unit (CU-C) (respectively 53a1 and 53a2) and at least one distributed unit (DU) (respectively 56a and 56b) serving a radio cell through respective radio frequency units (57a, 57b). The distributed units (56a, 56b) are logical nodes hosting RLC, MAC, and PHY layers of their gNB node, whose operation is controlled, at least in part, by the central unit logical nodes, more specifically by the user-plane central units (53b) for the user plane functions, and by the control-plane central units (53a1, 53a2, 54a, 54b) for the control plane functions.

The pool of backup control units (54) comprises a first (54a) and second (54b) control-plane central units (CU-C₁ and CU-C₂), which may each serve as a backup to each of the control-plane central units (53a1, 53a2) of the first and second gNB nodes (52a, 52b). For example, the first control-plane central units (CU-C₁) (54a) may serve as backup instance of the control-plane CU of the first gNB node (52a), and the second control-plane central unit (CU-C₂) (54b) may serve as backup instance of the control-plane CU of the second gNB node (52b).

The gNB nodes (52a, 52b) are interconnected by an X_{N} interface. Each of the DU (56a, 56b) is interconnected to the user-plane central unit (53b) by an F1-U interface, and to each of the control-plane central units (53a1, 53a2) and their respective backup (54a) by a F1-C interface. The AMF/UPF node (55) is interconnected to the user-plane central unit (53b) by an NG-U interface, and to each of the control-plane central units (53a1, 53a2, 54a, 54b) of the NG-RAN network by a NG-C interface.

Depending on the implementation, the distributed units (56a, 56b) and their respective control-plane central units (53a1, 53a2) may be implemented in co-located physical network nodes, or in the same physical network node, while the user-plane central unit, and the backup control-plane central units may each be implemented in separate physical nodes or in common physical nodes.

That is, in the exemplary architecture illustrated on Fig. 7, the gNB nodes (also referred to herein as "base stations") (52a, 52b) may be split into a DU (56a, 56b) and a respective local control-plane CU (CU-C) (53a1, 53a2), while the user plane functions of the CU may be provided by a user-plane CU (CU-U) common to the base stations (52a, 52b). The base stations may have backup instances of their CU-C, denoted as CU-C₁ for the base station gNB#1 and CU-C₂ for the base station gNB#2.

A mission-critical user terminal (51), illustrated as a bus on the figure, is in wireless communication with the first gNB node (52a) through the first RF unit (57a) and the first DU (56a). Fig. 7 illustrates the use of embodiments of the present disclosure in the exemplary case where the mission-critical user terminal (51) moves between the base stations gNB#1 (52a) and gNB#2 (52b) and is handed over from the first gNB node (52a) to the second gNB node (52b).

In one or more embodiments, the proposed configuration method may comprise a preliminary phase of identifying the gNBs which are, among the gNBs of the NG-RAN network (50), currently contributing to the mobility of the mission critical user terminals (51).

Different options may be considered for such identification according to the present subject disclosure.

In an embodiment, the gNBs which are contributing to the mobility of the mission critical user terminals (51) may be identified based on information reported from user terminals. For example, the base stations that are reported in radio measurements of mission critical user terminals may be identified as gNBs contributing to the mobility of the mission-critical user terminals.In another embodiment, the gNBs contributing to the mobility of the mission-critical user terminals may be obtained as the base stations that are contributing to a number of paths in the network beyond a predefined first threshold. To this end, measurements may be collected from the user terminals of the network, and a graph representation may be generated from these measurements, wherein each gNB in the network corresponds to a node of the graph, and each neighbouring gNB reported by the measurements is a node connected to the neighbouring gNB by an edge in the graph. A ranking of a gNB may then be obtained based on the contribution of the gNB to the paths in the graph. Therefore, the ranking of each gNB may reflect the contribution of the gNB to the paths, and a gNB with a high ranking may be considered as contributing to a high number of paths, whereas a gNB with low ranking may be considered as contributing to a low number of paths in the graph representation of the network. A first threshold may be defined to determine whether a gNB is contributing to the mobility of the mission-critical user terminals, based on the ranking of such gNB, such that the gNBs that are contributing the most to the mobility of the mission-critical user terminals are the gNBs with a ranking above the predefined first threshold.

In yet another embodiment, the gNBs contributing to the mobility of the mission-critical user terminals may be obtained as the base stations that are contributing to a number of currently active paths in the network beyond a predefined second threshold. To this end, measurements may be collected from the user terminals of the network including the measurements of handovers between the gNBs, and a graph representation may be generated from these measurements, wherein each gNB in the network corresponds to a node of the graph, and each neighbouring gNB reported by the measurements is a node connected to the neighbouring gNB by an edge in the graph. A ranking of a gNB may be obtained based on the contribution of the gNB to the paths in the graph. Therefore, the ranking of each gNB may reflect the contribution of the gNB to the paths, and a gNB with high ranking may be considered as contributing to a high number of paths, whereas a gNB with low ranking may be considered as contributing to a low number of paths in the graph representation of the network. A second threshold may be defined to determine whether a gNB is contributing to the mobility of the mission-critical user terminals, based on the ranking of such gNB, such that the gNBs that are contributing the most to the mobility of the mission-critical user terminals are the gNBs with a ranking above the predefined second threshold.

Depending on the embodiment, the identification of gNBs which are contributing to the mobility of the mission critical user terminals (51) may be performed in a centralized manner, for example by an Operation and Maintenance sub-system of the wireless system, or in a decentralized manner, for example by the gNB nodes of the NG-RAN network.

In one or more embodiments, the above-mentioned rankings may be perdiodically updated in order to update the connections for some of the DUs in the network.

In one or more embodiments, a reconfiguration of the fronthaul architecture and a configuration of the corresponding interfaces may be performed for the nodes that are contributing to the mobility of the mission critical user terminals.

As discussed above, various options may be considered for these architecture and interface reconfigurations:
In some embodiments, the network (for example, the OAM subsystem of the network) may configure the DUs to be connected to a single CU.

In some embodiments, site multi-homing may be used on the F1 interface between the DU and the CUs: in such embodiments, two SCTP associations may be setup over the F1 interface between the DU and the CUs: a direct SCTP association, linking the DU to CU-C, and a backup SCTP association that links the DU to the remote CU-C node. The source and target DUs may be (re)configured to share a common remote CU-C node. The reconfiguration of their fronthaul interfaces may be performed as follows: the direct SCTP association may be set as backup SCTP association, and the backup SCTP association may be set as direct SCTP association for both the source and target DUs. Alternatively, the source DU may disconnect from the primary CU and connect to the backup CU through the backup SCTP association. The source DU or CU may transmit the parameter of secondary association to the target DU. The target DU may connect to the backup CU of the source DU in order to finalize the fronthaul interface reconfiguration, so as to enable a fast handover as described in the present subject disclosure.

In other embodiments, referred to herein as F1-Flex, the source DU may be connected to a single CU-C through F1 and may hold a backup CU-C address. The association addresses are transmitted to the DU and/or to the CUs during the setup of F1 interface. In this context, the DU may be configured to determine the CU-C entity to which it can connect its F1 interface. The reconfiguration of the fronthaul interfaces may then be performed as follows: The source and target DUs are configured to have common backup CU, then F1-flex is performed for source and target DU at the handover preparation phase. Alternatively, the source DU may disconnect from its CU-C and establish F1 interface with a backup CU through F1 Flex. The source DU or CU-C may transmit the parameter of the F1 association of the backup CU-C of the source DU to the target DU. The target DU may reconfigure its F1 interface with the backup CU-C of the source DU.

Once common CU is setup for the source and target gNB, an inter-DU handover may be executed according to the procedure illustrated on Figure 4. This optimized handover procedure provides several advantages over the conventional inter-DU handover illustrated on Fig. 2, including minimisation of the handover latency and performance optimisation for the handover of mission critical user terminals, increased flexibility since site multihoming over F1 can add/release SCTP associations easily between the DU and different CUs of the pool of CUs (the DU splits its resources between the different CUs and can eventually readjust the resource splitting based on the F1 interface reconfiguration), and increased network resiliency since multiple CUs are available as fallbacks for failing CUs.

Different embodiments are also provided herein with regard to the network entity which may be configured to perform the identifying of a common CU-C.

In one or more embodiments, a central node of the network may be configured to identify the DUs that are/will contribute the most to the mobility of the UEs in the network, and to trigger the CU reconfiguration for the DUs. In a 5G network, the central node may be either located in a New Radio (NR) core network node (for example the node performing the access and mobility management function (AMF)), or in a specific access network node (for example a specific gNB) in the NG-RAN network.

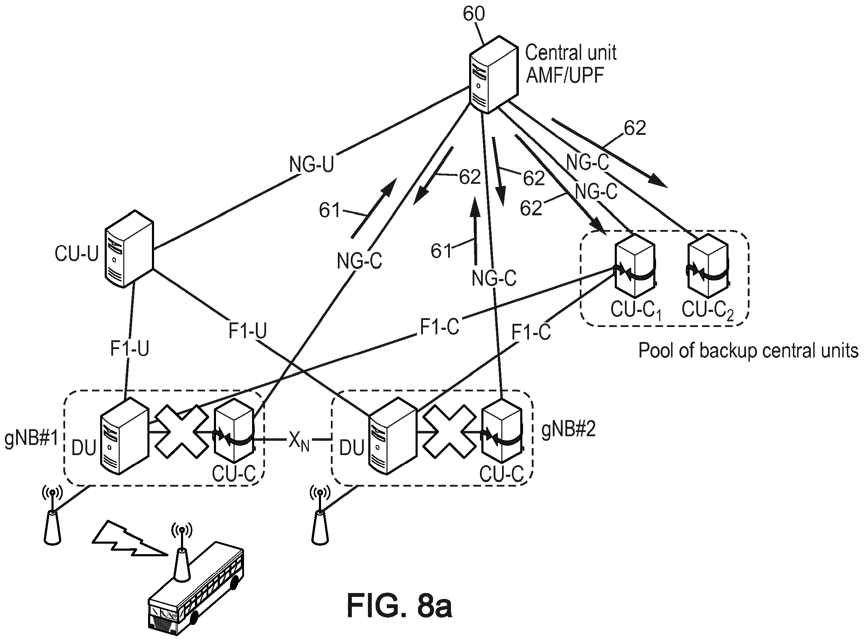

Figure 8a is a diagram that illustrates an exemplary network architecture in which the common CU-C identification function is centralized.

Shown on Fig. 8a is a 5G wireless communication system with an architecture similar to that shown on Figures 7 and 2b. A central unit (60) is located in an AMF/UPF entity of a 5G core network node. The local CU-C of respective gNBs transmit (61) to the central unit (60) measurements to identify DUs contributing to the mobility of user terminals. The central unit (60) is configured to, further to receiving such measurements, determine the DUs that contribute the most to the mobility in the network, for example by determining the DUs whose contribution to the mobility in the network is beyond a predetermined threshold. The central unit (60) is further configured to, once the DUs that contribute the most to the mobility in the network are determined, determine a common CU, and trigger (62) the common CU configuration, including the reconfiguration of the corresponding F1 interfaces, according to one of the embodiments of the present disclosure.

The centralized common CU-C identification function advantageously provides good performance, i.e. low handover latency for the group, at the cost of increased signalling towards the central unit.

In other embodiments, the gNBs may be configured to cooperatively determine respecitve ranks of their contribution to the group mobility of the network. Each gNB with high ranking may then decide autonomously to reconfigure its CU-C to be a common CU-C with the most highly ranked gNB in its neighbourhood. In these embodiments the common CU-C identification function is decentralized because the nodes cooperatively obtain their rank first, then the CU of each gNB may decide based on rank criteria to reconfigure its CU to the common CU.

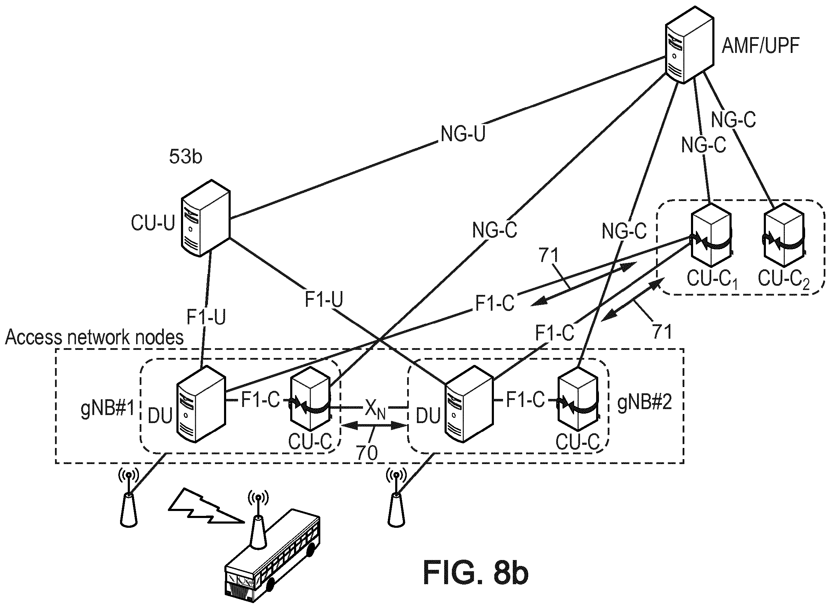

Figure 8b is a diagram that illustrates an exemplary network architecture in which the common CU-C identification function is decentralized.

Shown on Fig. 8b is a 5G wireless communication system with an architecture similar to that shown on Figures 7 and 2b. The gNBs (gNB#1 and gNB#2) cooperatively determine (70) their respective contributions to the group mobility. Each gNB may then proceed to reconfigure (71) its CU to a common CU shared by at least two gNBs, based on its determined contribution to the group mobility. As is illustrated on Fig. 8b, a common CU-C may be selected in a pool of back-up CU-C entities in which a backup CU-C entity is selected to be configured as common CU-C entity shared by the DU of gNB#1 and the DU of gNB#2.

The decentralized common CU-C identification approach advantageously provides good performance and flexibility i.e. low handover latency for the group and the ability to handle non uniform (local) traffic variations of mission-critical handovers, at the cost of an increased signalling on the Xn interface between gNBs.

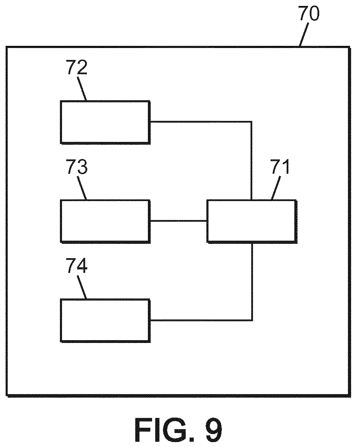

Fig. 9 illustrates an exemplary network node (70) configured to use a network management feature in accordance with embodiments of the present subject disclosure.

The network node (70) includes a control engine (71), a management engine (72), a data communication engine (73), and a memory (74).

In the architecture illustrated on Fig. 9, all of the management engine (72), data communication engine (73), and memory (74) are operatively coupled with one another through the control engine (71).

In one embodiment, the management engine (72) is configured to perform various aspects of embodiments of the proposed method for access network node management, such as determining a CU-C entity that may serve as common CU-C to several DU entities, determining DU entities for which configuration of a common CU-C entity may be desired, and triggering the configuration of a common CU-C, including the configuration of the interface between the common CU-C and the DU entities to be controlled by the common CU-C.

In one embodiment, the data communication engine (73) is configured to receive and transmit data packets (including signaling data packets), and process received packets.

The control engine (71) includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, the network node (70) can be configured as a multi-processor computer having multiple processors for providing parallel computing. The control engine (71) may also comprise, or may be in communication with, computer storage media, such as, without limitation, the memory (74), capable of storing computer program instructions or software code that, when executed by the processor, cause the processor to perform the elements described herein. In addition, the memory (74) may be any type of data storage computer storage medium, capable of storing a data structure representing a computer network to which the network node (70) belongs, coupled to the control engine (71) and operable with the data communication engine (73) and the management engine (72) to facilitate management and processing of data packets stored in association therewith.

It will be appreciated that the network node (70) shown and described with reference to Fig. 9 is provided by way of example only. Numerous other architectures, operating environments, and configurations are possible. Other embodiments of the node may include fewer or greater number of components, and may incorporate some or all of the functionality described with respect to the network node components shown in Fig. 9. Accordingly, although the control engine (71), management engine (72), data communication engine (73), and memory (74) are illustrated as part of the network node (70), no restrictions are placed on the location and control of components (71) - (74). In particular, in other embodiments, components (71) - (74) may be part of different entities or computing systems.

While the invention has been described with respect to preferred embodiments, those skilled in the art will readily appreciate that various changes and/or modifications can be made to the invention without departing from the scope of the invention as defined by the appended claims.

## Claims

1. A method for managing a first access network node in a network of a wireless communication system, comprising:
- determining (20) in the network a second central unit for managing a control plane of data communications between a user equipment, UE, and the network, CU-C, other than a first CU-C of the first access network node, wherein the first access network node further comprises at least one first distributed unit, DU, for wireless data communications between the UE and the first access network node, operating under the control of the first CU-C, and wherein the second CU-C controls at least one second DU comprised in a second access network node; and
- configuring (21) the first access network node, wherein the configuring (21) comprises: associating (22) at least one DU among the at least one first DU with the second CU-C, such that the at least one DU and the at least second DU operate under the common control of the second CU-C for management of the control plane of data communications between the UE and the network.

2. The method according to claim 1, wherein the configuring further comprises: configuring a first data communication control interface connection between the at least one DU and the second CU-C.

3. The method according to claim 2, wherein the configuring the first data communication control interface connection comprises: setting up the first data communication control interface connection between the at least one DU and the second CU-C.

4. The method according to any claim 2, wherein the configuring further comprises: replacing a second data communication control interface connection between the at least one DU and the first CU-C with the first data communication control interface connection between the at least one DU and the second CU-C.

5. The method according to claim 2, wherein the configuring the first data communication control interface connection further comprises: configuring respective flow priorities associated with data communication flows carried on the first data communication control interface connection to associate first flow priorities with flows between the at least one DU and the second CU-C, and second flow priorities with flows between the at least one DU and the first CU-C.

6. The method according to any of the preceding claims, further comprising: selecting in the network the first access node based on data communication traffic intensities respectively associated with the at least one first DU.

7. The method according to claim 6, further comprising: determining in the wireless communication system at least one UE belonging to a category, and selecting in the network the first access node based on data communication traffic intensities respectively associated with the at least one first DU for the determined at least one UE.

8. The method according to claim 7, wherein the category is a predetermined category.

9. The method according to claim 7, wherein the determining in the wireless communication system the at least one UE belonging to the category comprises: determining that the at least one UE has been dynamically assigned to the category.

10. The method according to any of the preceding claims, wherein the network is a 5G network, and the first and second access network nodes are first and second generalized Node-B, gNB, respectively, of the 5G network.

11. An apparatus (70), the apparatus (70) comprising a processor (71), a memory (74) operatively coupled to the processor (71), and network interfaces to communicate in a network of a wireless communication system, wherein the apparatus (70) is configured to perform a method according to any of claims 1 to 10.

12. A generalized Node-B, gNB, of a 5G network, comprising the apparatus of claim 11.

13. A non-transitory computer-readable medium encoded with executable instructions which, when executed, causes an apparatus comprising a processor operatively coupled with a memory, to perform a method according to any of claims 1 to 10.

14. A computer program product comprising computer program code tangibly embodied in a computer readable medium, said computer program code comprising instructions to, when provided to a computer system and executed, cause said computer to perform a method according to any of claims 1 to 10.

## Patentansprüche

1. Verfahren zum Verwalten eines ersten Zugangsnetzknotens in einem Netzwerk eines drahtlosen Kommunikationssystems, umfassend:
- Bestimmen (20), in dem Netzwerk, einer zweiten Zentraleinheit zum Verwalten einer Steuerungsebene einer Datenkommunikation zwischen einem Benutzergerät, UE, und dem Netzwerk, CU-C₁ welches sich von einem ersten CU-C des ersten Zugangsnetzknotens unterscheidet, wobei der erste Zugangsnetzknoten ferner wenigstens eine erste verteilte Einheit, DU, für eine drahtlose Kommunikation zwischen dem UE und dem ersten Zugangsnetzknoten umfasst, welche unter der Steuerung des CU-C arbeitet, und wobei das zweite CU-C wenigstens eine zweite DU steuert, welche in einem zweiten Zugangsnetzknoten umfasst ist; und
- Konfigurieren (21) des ersten Zugangsnetzknotens, wobei das Konfigurieren (21) umfasst: Zuordnen (22) wenigstens einer DU unter der wenigstens einen ersten DU zu dem zweiten CU-C₁ so dass die wenigstens eine DU und die wenigstens eine zweite DU unter der gemeinsamen Steuerung des zweiten CU-C für eine Verwaltung der Steuerungsebene einer Datenkommunikation zwischen dem UE und dem Netzwerk arbeiten.

2. Verfahren nach Anspruch 1, wobei das Konfigurieren ferner umfasst: Konfigurieren einer ersten Datenkommunikation-Steuerungsschnittellenverbindung zwischen der wenigstens einen DU und dem zweiten CU-C.

3. Verfahren nach Anspruch 2, wobei das Konfigurieren der ersten Datenkommunikation-Steuerungsschnittellenverbindung umfasst: Einrichten der ersten Datenkommunikation-Steuerungsschnittellenverbindung zwischen der wenigsten einen DU und dem zweiten CU-C.

4. Verfahren nach Anspruch 2, wobei das Konfigurieren ferner umfasst: Ersetzen einer zweiten Datenkommunikation-Steuerungsschnittellenverbindung zwischen der wenigstens einen DU und dem ersten CU-C durch die erste Datenkommunikation-Steuerungsschnittellenverbindung zwischen der wenigstens einen DU und dem zweiten CU-C.

5. Verfahren nach Anspruch 2, wobei das Konfigurieren der ersten Datenkommunikation-Steuerungsschnittellenverbindung ferner umfasst: Konfigurieren jeweiliger Flussprioritäten, welche Datenkommunikationsflüssen zugeordnet sind, welche an der ersten Datenkommunikation-Steuerungsschnittellenverbindung getragen werden, um erste Flussprioritäten zu Flüssen zwischen der wenigstens einen DU und dem zweiten CU-C₁ und zweite Flussprioritäten zu Flüssen zwischen der wenigstens einen DU und dem ersten CU-C zuzuordnen.

6. Verfahren nach einem der vorhergehenden Ansprüche, ferner umfassend: Auswählen, in dem Netzwerk, des ersten Zugangsknotens auf Grundlage von Datenkommunikationsverkehr-Intensitäten, welche jeweils der wenigstens einen ersten DU zugeordnet sind.

7. Verfahren nach Anspruch 6, ferner umfassend: Bestimmen, in dem drahtlosen Kommunikationssystem, wenigstens eines UE, welches zu einer Kategorie gehört, und Auswählen, in dem Netzwerk, des ersten Zugangsknotens auf Grundlage von Datenkommunikationsverkehr-Intensitäten, welche jeweils der wenigstens einen ersten DU für das bestimmte wenigstens eine UE zugeordnet sind.

8. Verfahren nach Anspruch 7, wobei die Kategorie eine vorbestimmte Kategorie ist.

9. Verfahren nach Anspruch 7, wobei das Bestimmen, in dem drahtlosen Kommunikationssystem, des wenigstens einen UE, welches zu der Kategorie gehört, umfasst: Bestimmen, dass das wenigstens eine UE dynamisch zu der Kategorie zugeordnet worden ist.

10. Verfahren nach einem der vorhergehenden Ansprüche, wobei das Netzwerk ein 5G-Netzwerk ist, und der erste und der zweite Zugangsnetzknoten ein erster bzw. ein zweiter generalisierter Knoten-B, gNB, des 5G-Netzwerks sind.

11. Vorrichtung (70), wobei die Vorrichtung (70) einen Prozessor (71), einen Speicher (74), welcher betriebsmäßig mit dem Prozessor (71) gekoppelt ist, und Netzwerkschnittstellen umfasst, um in einem Netzwerk eines drahtlosen Kommunikationssystems zu kommunizieren, wobei die Vorrichtung (70) dazu eingerichtet ist, ein Verfahren nach einem der Ansprüche 1 bis 10 durchzuführen.

12. Generalisierter Knoten-B, gNB, eines 5G-Netzwerkes, umfassend die Vorrichtung nach Anspruch 11.

13. Nicht-transitorisches computerlesbares Medium, welches mit ausführbaren Anweisungen kodiert ist, welche, wenn ausgeführt, eine Vorrichtung, welche einen Prozessor umfasst, welcher betriebsmäßig mit einem Speicher gekoppelt ist, veranlassen, ein Verfahren nach einem der Ansprüche 1 bis 10 durchzuführen.

14. Computerprogrammprodukt, umfassend Computerprogrammcode, welcher zugreifbar in einem computerlesbaren Medium enthalten ist, wobei der Computerprogrammcode Anweisungen umfasst, um, wenn einem Computersystem bereitgestellt und ausgeführt, den Computer zu veranlassen, ein Verfahren nach einem der Ansprüche 1 bis 10 durchzuführen.

## Revendications

1. Procédé de gestion d'un premier noeud de réseau d'accès dans un réseau d'un système de communication sans fil, comprenant :
- la détermination (20) dans le réseau d'une deuxième unité centrale pour gérer un plan de contrôle de communications de données entre un équipement utilisateur, UE, et le réseau, CU-C₁ autre qu'une première CU-C du premier noeud de réseau d'accès, dans lequel le premier noeud de réseau d'accès comprend en outre au moins une première unité distribuée, DU, pour des communications de données sans fil entre l'UE et le premier noeud de réseau d'accès, fonctionnant sous le contrôle de la première CU-C₁ et dans lequel la deuxième CU-C contrôle au moins une deuxième DU comprise dans un deuxième noeud de réseau d'accès ; et
- la configuration (21) du premier noeud de réseau d'accès, dans lequel la configuration (21) comprend : l'association (22) d'au moins une DU parmi l'au moins une première DU avec la deuxième CU-C₁ de telle manière que l'au moins une DU et l'au moins deuxième DU fonctionnent sous le contrôle commun de la deuxième CU-C pour la gestion du plan de contrôle de communications de données entre l'UE et le réseau.

2. Procédé selon la revendication 1, dans lequel la configuration comprend en outre : la configuration d'une première connexion d'interface de contrôle de communication de données entre l'au moins une DU et la deuxième CU-C.

3. Procédé selon la revendication 2, dans lequel la configuration de la première connexion d'interface de contrôle de communication de données comprend : l'établissement de la première connexion d'interface de contrôle de communication de données entre l'au moins une DU et la deuxième CU-C.

4. Procédé selon une quelconque revendication 2, dans lequel la configuration comprend en outre : le remplacement d'une deuxième connexion d'interface de contrôle de communication de données entre l'au moins une DU et la première CU-C avec la première connexion d'interface de contrôle de communication de données entre l'au moins une DU et la deuxième CU-C.

5. Procédé selon la revendication 2, dans lequel la configuration de la première connexion d'interface de contrôle de communication de données comprend en outre : la configuration de priorités de flux respectives associées à des flux de communication de données portés sur la première connexion d'interface de contrôle de communication de données pour associer des premières priorités de flux à des flux entre l'au moins une DU et la deuxième CU-C₁ et des deuxièmes priorités de flux à des flux entre l'au moins une DU et la première CU-C.

6. Procédé selon l'une quelconque des revendications précédentes, comprenant en outre : la sélection dans le réseau du premier noeud d'accès sur la base d'intensités de trafic de communication de données respectivement associées à l'au moins une première DU.

7. Procédé selon la revendication 6, comprenant en outre : la détermination dans le système de communication sans fil d'au moins un UE appartenant à une catégorie, et la sélection dans le réseau du premier noeud d'accès sur la base d'intensités de trafic de communication de données respectivement associées à l'au moins une première DU pour l'au moins un UE déterminé.

8. Procédé selon la revendication 7, dans lequel la catégorie est une catégorie prédéterminée.

9. Procédé selon la revendication 7, dans lequel la détermination dans le système de communication sans fil de l'au moins un UE appartenant à la catégorie comprend : la détermination que l'au moins un UE a été dynamiquement affecté à la catégorie.

10. Procédé selon l'une quelconque des revendications précédentes, dans lequel le réseau est un réseau SG, et les premier et deuxième noeuds de réseau d'accès sont un premier et un deuxième noeud B généralisé, gNB, respectivement, du réseau SG.

11. Appareil (70), l'appareil (70) comprenant un processeur (71), une mémoire (74) couplée de manière fonctionnelle au processeur (71), et des interfaces réseau pour communiquer dans un réseau d'un système de communication sans fil, dans lequel l'appareil (70) est configuré pour réaliser un procédé selon l'une quelconque des revendications 1 à 10.

12. Noeud B généralisé, gNB, d'un réseau SG, comprenant l'appareil selon la revendication 11.

13. Support lisible par ordinateur non transitoire codé avec des instructions exécutables qui, lorsqu'elles sont exécutées, amènent un appareil comprenant un processeur couplé de manière fonctionnelle à une mémoire, à réaliser un procédé selon l'une quelconque des revendications 1 à 10.

14. Produit de programme informatique comprenant un code de programme informatique incorporé de manière tangible dans un support lisible par ordinateur, ledit code de programme informatique comprenant des instructions pour, lorsqu'elles sont fournies à un système informatique et exécutées, amener ledit ordinateur à réaliser un procédé selon l'une quelconque des revendications 1 à 10.
